# FASCICULE DE BREVET EUROPEEN

(11) **EP 3 230 397 B1**
(45) Date de publication et mention de la délivrance du brevet: **20.01.2021**
(21) Numéro de dépôt: 15817110.8
(22) Date de dépôt: 10.12.2015
(51) Int. Cl.: C09K 5/06, C09K 15/08, C09K 15/14

(54) **UTILISATION D'ADDITIFS POUR DIMINUER LE VIEILLISSEMENT DES MATÉRIAUX À CHANGEMENT DE PHASE**
VERWENDUNG VON ADDITIVEN ZUR REDUZIERUNG DES ALTERNS VON PHASENWECHSELMATERIALIEN
USE OF ADDITIVES TO REDUCE THE AGEING OF PHASE-CHANGE MATERIALS

(30) Priorité: 11.12.2014 FR 1462252
(43) Date de publication de la demande: 18.10.2017
(73) Titulaire: Arkema France, 92700 Colombes (FR)
(72) Inventeur: DISSON, Jean-Pierre, 69390 Vernaison (FR); FUCHS, Gilbert, 69001 Lyon (FR)
(74) Mandataire: Casalonga
(86) Numéro de dépôt international: PCT/EP2015/079227
(87) Numéro de publication internationale: WO 2016/092005

(56) Documents cités:
- US-A- 4 370 434
- US-A- 5 755 988
- US-A1- 2002 054 964
- US-A1- 2009 184 283

## Description

La présente invention concerne l'utilisation d'additifs, particulièrement d'antioxydants, et plus particulièrement d'antioxydants dérivés du phénol pour diminuer le vieillissement de matériaux à changement de phase utilisés comme fluides d'échange thermique dans des systèmes d'échanges de chaleur et de stockage thermique.

La présente invention concerne également une composition comprenant un ou plusieurs additifs, particulièrement des antioxydants, et plus particulièrement des antioxydants dérivés du phénol et un ou plusieurs matériaux à changement de phase, ainsi qu'un dispositif et un procédé pour le stockage et la redistribution d'énergie thermique.

Les matériaux à changement de phase (ou MCP) sont des matériaux capables de stocker de l'énergie de manière latente lors d'un changement d'état physique réversible.

La densité énergétique et la compacité des éléments de stockage d'énergie fabriqués à partir de ces matériaux les rendent nettement plus compétitifs que les matériaux de stockage par chaleur sensible, qui stockent l'énergie sous forme d'une élévation de leur température (sans changement de phase).

Précisément, les MCP ont la capacité d'absorber une certaine quantité de chaleur lorsqu'ils passent d'un état physique à un autre, généralement lors de leur fusion, avec une modification modérée de leur température et de celle de leur environnement, et de restituer de la chaleur en reprenant leur état physique d'origine, notamment en recristallisant. Ces matériaux sont d'autant plus intéressants que la quantité de chaleur échangée pendant ces changements de phase, est grande. Dans le cas d'une transition solide/liquide (ou liquide/solide), celle-ci est exprimée par leur enthalpie de fusion (ou de cristallisation). Les températures de fusion et de cristallisation des MCP déterminent par ailleurs leurs applications possibles.

Parmi celles-ci, on peut citer le refroidissement de produits alimentaires ou de produits pharmaceutiques sensibles à la chaleur, de matériaux textiles, de moteurs, de composants et circuits électroniques ou d'installations de combustion de déchets. A l'échelle industrielle, les MCP constituent également un moyen pour récupérer la chaleur dégagée ou disponible contenue dans des récipients ou équipements (comme des réacteurs chimiques, des générateurs d'énergie électrique ou mécanique) ou dans des courants ou fluides de « process » (par exemple des circuits de refroidissement/chauffage, des effluents), notamment lors de certaines réactions chimiques exothermiques. La chaleur dégagée peut ensuite être réutilisée pour apporter de l'énergie à d'autres réactions, ce qui permet de réduire la consommation industrielle d'énergie fossile ou électrique.

L'utilisation des MCP dans des cycles de climatisation (chauffage/refroidissement) est également un exemple d'application où l'on peut efficacement stocker de l'énergie thermique pour la restituer ensuite en temps et quantité voulus.

Le matériau MCP le plus courant n'est autre que l'eau. Lors de sa transition solide/liquide (et donc implicitement liquide/solide), elle permet d'absorber ou de libérer des quantités importantes de chaleur. C'est ainsi que des bacs ou des piscines d'eau à une température proche de 0°C, libre (sous forme de mélange glace/eau liquide) ou encapsulée, par exemple dans des boules en plastique ou autres matériaux, constituent un exemple simple d'un système MCP capable de stocker (lors de la fusion de la glace) et de restituer (lors de la cristallisation de l'eau liquide) d'importantes quantités d'énergie par unité de masse d'eau. Cependant, l'eau, bien qu'abondante, disponible, pas toxique, ne peut pas résoudre tous les problèmes possibles en matière d'efficacité d'échange thermique du fait de son domaine restreint d'utilisation (vers 0°C) et des problèmes liés à la forte expansion volumique de la glace lors de sa formation.

D'autres MCP courants comprennent les paraffines et les acides gras, tels que l'acide dodécanoïque, utilisés pour la climatisation des bâtiments, les sels hydratés tels que Mn(NO₃)₂.H₂O, MnCl₂.H₂O, Na₂S₂O₃.5H₂O et CH₂COONa.3H₂O, et les mélanges eutectiques, notamment d'acide caprique et d'acide laurique. Ces composés ont généralement des températures de fusion assez basses, allant de 15 à 48°C environ. Autour de 150°C, on connaît l'acide adipique (C₆H₁₀O₄, 152°C) ou le maltitol (C₁₂H₂₄O₁₁, 145°C) et pour des températures de fusion voisines de 300°C, les MCP connus sont par exemple des sels tels que NaNO₃ (307°C), KNO₃ (333°C).

Ces MCP présentent toutefois de nombreux inconvénients freinant leur développement industriel. En particulier, les MCP organiques peuvent être inflammables, présenter une faible conductivité thermique à l'état solide, nécessiter d'importants transferts de chaleur durant le cycle de gel, et présenter une faible chaleur latente volumétrique. Par ailleurs, les paraffines peuvent poser des problèmes d'approvisionnement, de coût et de génération de CO₂ en raison de leur origine pétrolière. Les MCP inorganiques génèrent, de leur côté, des phénomènes de surfusion importants. En outre, leurs températures de transition de phase ne sont pas constantes du fait, notamment, de leur hygroscopie. Enfin, ils sont susceptibles d'entraîner une corrosion des métaux avec lesquels ils sont en contact, ce qui entraîne des coûts de maintenance inacceptables. On trouvera par exemple une revue détaillée des différents types de MCP étudiés dans H. Mehling, L.F. Cabeza, « Heat and cold storage with PCM », 2008, Springer-Verlga, ISBN 978-3-540-68556-2, ou dans Fatih Demirbas, « Thermal Energy storage and phase change materials », 2006, Energy Sources Part B, 1 :85-95.

De manière générale, les applications utilisant des MCP sont principalement des applications de « basse température », correspondant à des plages de -20 à 80°C environ : stockage de denrées alimentaires, isolation thermique de bâtiments, textiles thermosensibles. Il reste cependant un besoin pour des MCP efficaces pouvant récupérer de l'énergie à des températures plus élevées.

Pour palier certains des inconvénients précités, il a été proposé d'utiliser des cires végétales ou animales, telles que la cire d'abeille, des alcools de sucre tels que l'érythritol, et des acides ou diacides gras linéaires d'origine végétale qui offrent un choix de températures de transition (de 20 à 155°C) et de chaleur latente de fusion (de 140 J.g⁻¹ à 240 J.g⁻¹) en fonction de leur longueur de chaîne, de leur degré d'insaturation et de leurs fonctions acides, liées à leur cristallinité. (voir J. Waschull, R. Müller and S. Römer, Investigation of Phase Change Materials for Elevated Temperatures, 2009, Institute for Air Conditioning and Refrigeration Dresden (ILK Dresden), Stockton University, Energy studies). Néanmoins cette revue se contente de lister des composés organiques présentant de fortes enthalpies de cristallisation, mais ne détaille pas d'autres aspects essentiels à l'application de ces molécules en tant que MCP, et en particulier la stabilité au cyclage thermique.

Par ailleurs, certains matériaux aminés ont été décrits comme MCP. Il s'agit en particulier des clathrates constitués de N,N,N',N'-tétraméthyléthylène diamine quaternisée et de N,N,N',N'-tétraméthyl-1,6-hexanediamine quaternisée décrits par Usmani A. Dans "Journal of Materials Science Letters", 2, 1983, 681-682, qui ont un point de fusion de 0 à 31°C, et des adduits d'acide formique et de N,N,N',N'-tétraméthyléthylène diamine décrits par Salman M. et coll. dans Journal of Thermal Analysis, 1991, Vol. 37, 2389-2394. Le premier de ces adduits, A4B, a une température de fusion de 18°C tandis que le second, A2B, a une température de fusion de 60°C mais est présenté comme thermiquement instable. Le document EP 0 094 366 divulgue en outre un système de stockage d'énergie thermique utilisant un MCP constitué d'une diamine de formule H₂N-(CH₂)ₙ-NH₂ où n est un entier allant de 4 à 14. Ces composés ont des températures de fusion de 16 à 73°C environ mais ils présentent également une mauvaise stabilité thermique se traduisant par une perte d'efficacité de stockage de la chaleur. On connaît par ailleurs du document US 2005/208286 un composite polymérique comprenant un MCP éventuellement encapsulé, un dispersant polymérique et éventuellement une matrice polymérique, destiné à la fabrication de fibres synthétiques. Le MCP peut être choisi parmi une large gamme de composés, tels que des diacides, des polymères dont certains peuvent être issus de monomères azotés et préférentiellement des hydrocarbures. Cependant, les polymères ne constituent pas de bons MCP car ils présentent une chaîne principale trop longue pour permettre d'obtenir une énergie de transition de phase élevée.

L'utilisation de diacides comme MCP a été suggérée par D. Haillot et al, « Thermal analysis of phase change materials in the temperature range 120-150°C », 2011, Thermochimica Acta 513, 49-59. Des diacides comme l'acide adipique, l'acide maléique, et l'acide sébacique ont été étudiés. L'article conclut à des limitations à cause de la stabilité thermique pour l'acide maléique, et à un comportement stable sur cinq cycles de chauffage - refroidissement avec les acides adipiques ou sébaciques, mais mentionne également une perte en poids avec dégagement gazeux qui peut être un indicateur d'une instabilité et d'une limitation d'usage pour un grand nombre de cycles.

Les cycles thermiques provoquent une modification des propriétés thermodynamiques des matériaux à changement de phase qui se concrétise notamment par une baisse de l'enthalpie de fusion et de cristallisation, et des dégagements gazeux. Ce phénomène a été constaté par exemple pour l'acide sébacique qui pourrait répondre au besoin de MCP d'origine renouvelable, présentant une température de fusion comprise entre 25°C et 240°C. Cependant le document US 5 755 988 souligne que ce composé est trop volatile et a tendance à se dégrader à haute température, notamment dans la plage 150-200°C, ce qui le rend a priori inapproprié pour être utilisé comme MCP dans certaines applications.

Pour les raisons expliquées ci-dessus, les applications commerciales utilisant des MCP sont à ce jour principalement des applications de « basse température », correspondant à des plages de - 20 à 80°C environ : stockage de produits sensibles (aliments, organes), isolation thermique de bâtiments, textiles thermosensibles, protection de coffret électriques et électroniques, batteries... Cependant il reste un besoin pour des MCP pouvant récupérer de l'énergie à des températures plus élevées, comme indiqué précédemment, et en particulier dans les plages de température 100-200°C qui correspondent à des rejets basse température de nombreuses industries, rejets non valorisés à ce jour. Or, dans ces plages de température les sels ou hydrates de sels présentent des problèmes de surfusion importante, de déstabilisation, et de corrosion. Et les molécules organiques candidates ont aussi des surfusions parfois élevées (cas des alcools de sucre) et des problèmes de stabilité au cyclage thermique. Des exemples d'additifs, tels que certains antioxydants, notamment pour limiter l'oxydation des MCP, et ainsi améliorer leur stabilité, ont notamment été décrits dans US 2002/054964, US 2009/184283 ou US 4 370 434, mais les durées de vie obtenues ne sont encore pas suffisantes.

Il subsiste par conséquent un réel besoin de développer des matériaux à changement de phase présentant une durée de vie plus longue pour des températures d'utilisation au-delà de quelques dizaines de degrés. Ces matériaux à changement de phase doivent en particulier, être résistants à un grand nombre de cycles de fusion/cristallisation et doivent présenter de bonnes propriétés thermiques.

La Demanderesse a maintenant découvert que l'utilisation de certains additifs en particulier d'antioxydants, et plus particulièrement d'antioxydants dérivés du phénol, permettait d'allonger la durée de vie d'un ou plusieurs MCP. Ainsi l'ajout de ces additifs permet-il de valoriser les molécules organiques qui pourraient être utilisées comme MCP.

La présente invention a donc pour objet l'utilisation d'un ou plusieurs additifs de formule (I) suivante: 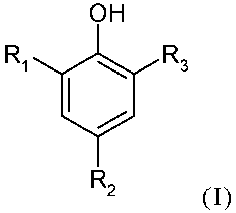 dans laquelle :
- R₁ représente une chaîne alkyle linéaire ou ramifiée, saturée ou insaturée en C₁ à C₁₈, éventuellement substituée par un hétéroatome,
- R₃ représente une chaîne alkyle linéaire ou ramifiée, saturée ou insaturée en C₁ à C₁₈, éventuellement substituée par un hétéroatome,
- R₂ représente un groupement -(CH₂)₂CO-OR₄, dans lequel R₄ représente :
   - un groupement de formule (II) suivante : 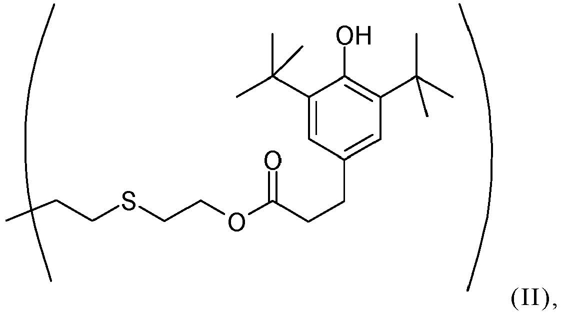 pour diminuer le vieillissement d'un matériau à changement de phase choisi parmi les acides α,β-dicarboxyliques aliphatiques linéaires ou ramifiés en C₄ à C₄₀.

En effet, il a été observé de façon surprenante, que les matériaux à changement de phase, auxquels ont été ajoutés les additifs selon l'invention présentent une durée de vie plus longue et sont par conséquent plus résistants à un grand nombre de cycles fusion/cristallisation.

Un autre objet de la présente invention concerne une composition comprenant un ou plusieurs additifs de formule (I), et un ou plusieurs MCP tels que définis précédemment.

Enfin la présente invention concerne un dispositif adapté au stockage et à la restitution d'énergie thermique comprenant un ou plusieurs additifs, en particulier antioxydants de formule (I), et un ou plusieurs MCP particuliers, ainsi qu'un procédé pour le stockage et la redistribution d'énergie thermique mettant en œuvre les additifs de formule (I).

En effet, l'utilisation des additifs de formule (I) permet également d'étendre le domaine d'utilisation de certains matériaux à changement de phase, et notamment ceux choisis parmi les acides α, β-dicarboxyliques aliphatiques linéaires ou ramifiés en C₄ à C₄₀.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

### Utilisation pour la diminution du vieillissement

### Les additifs

La présente invention a donc pour objet l'utilisation d'un ou plusieurs additifs, en particulier d'antioxydants, plus particulièrement d'antioxydants dérivés du phénol de formule (I) précitée pour diminuer le vieillissement d'un ou plusieurs matériaux à changement de phase choisi(s) parmi les acides α, β-dicarboxyliques aliphatiques linéaires ou ramifiés en C₄ à C₄₀.

Le groupe R₁ représente une chaîne alkyle linéaire ou ramifiée, saturée ou insaturée en C₁ à C₁₈, la chaîne alkyle étant éventuellement substituée par un hétéroatome, et préférentiellement en C₁ à C₄.

Le groupe R₃ représente une chaîne alkyle linéaire ou ramifiée, saturée ou insaturée en C₁ à C₁₈, la chaîne alkyle étant éventuellement substituée par un hétéroatome, et préférentiellement en C₁ à C₄.

De préférence, les groupes R₁ et R₃ sont identiques, c'est-à-dire qu'ils représentent le même groupement.

Le groupe R₂ représente
- un groupement (CH₂)₂COOR₄, avec R₄ tel que défini précédemment.

Les additifs utilisables dans le cadre de la présente invention sont de préférence des composés connus pour leurs pouvoirs antioxydants et plus préférentiellement ces additifs sont des antioxydants de type phénol.

Le ou les additifs sont choisis parmi les composés de formule (I), pour lesquels R₂ représente un groupement ester, à savoir un groupement (CH₂)₂COOR₄, avec R₄ tel que défini précédemment.

Plus particulièrement, le ou les additifs de formule (I) sont choisis parmi : le thiodiéthylène-bis[3-(3,5-di-tert-butyl-4-hydroxyphényl)-propionate], dont le numéro CAS est 41484-35-9.

Le ou les additifs de formule (I) sont présents dans une teneur allant de 0,01 à 15% en poids, de préférence de 0,05 à 10% en poids, et plus préférentiellement de 0,1 à 5% en poids, par rapport au poids du mélange comprenant le ou les additifs de formule (I) et le ou les matériaux à changement de phase.

### Les matériaux à changement de phase

Selon la présente invention, l'expression « matériau à changement de phase » concerne les matériaux à changement de phase ayant subis ou non une étape de chauffage ou des cycles thermiques ou toutes autres étapes ayant modifié les propriétés thermodynamiques du matériau à changement de phase.

Plus particulièrement, lorsqu'on parle d'un matériau à changement de phase avec des propriétés thermodynamiques modifiées, il s'agit d'un matériau, dont les enthalpies de fusion et de cristallisation ont diminué au cours du ou des cycles thermiques. Encore plus particulièrement, il s'agit d'un matériau à changement de phase dont les enthalpies de fusion et de cristallisation présentent une variation et plus particulièrement une diminution d'au moins 10%, et plus préférentiellement d'au moins 15% par rapport aux valeurs initiales.

Les matériaux à changement de phase selon la présente invention sont choisis parmi les acides α,ω-dicarboxyliques aliphatiques linéaires ou ramifiés en C₄ à C₄₀, plus préférentiellement en C₆ à C₃₆, et mieux encore en C₆ à C₁₈.

A titre d'exemples d'acides dicarboxyliques, on peut citer les acides aliphatiques tels que les acides butanedioïque (ou acide succinique, C₄ saturé), maléique (C₄ insaturé), adipique (ou acide hexanedioïque, C₆ saturé), pimélique (ou acide 1,7-heptanedioïque, C₇ saturé), subérique (ou acide 1,8-octanedioïque, Cs saturé), azélaïque (ou acide 1,9-nonanedioïque, C₉ saturé)1, sébacique (ou acide 1,10-décanedioïque, C₁₀ saturé), 11-undécanedioïque (C₁₁ saturé), 1,12-dodécanedioïque (C₁₂ saturé), acide 1,13-tridécanedioïque (ou acide brassylique, C₁₃ saturé), acide 1,14-tétradécanedioïque (C₁₄ saturé), acide 1,15-pentadécanedioïque (C₁₅ saturé), acide 1,16-hexadécanedioïque (ou acide thapsique, C₁₆ saturé), 1,18-octadécanedioïque (C₁₈ saturé) et les acides dicarboxyliques aromatiques tels que les acides téréphtalique et isophtalique.

De préférence, les matériaux à changement de phase selon la présente invention sont choisis parmi les acides butanedioïque (ou acide succinique, C₄ saturé), maléique (C₄ insaturé), adipique (ou acide hexanedioïque, C₆ saturé), acide 1,4-cyclohexyldioïque (ou acide téréphtalique), pimélique (ou acide 1,7-heptanedioïque, C₇ saturé), subérique (ou acide 1,8-octanedioïque, C₈ saturé), azélaïque (ou acide 1,9-nonanedioïque, C₉ saturé), sébacique (ou acide 1,10-décanedioïque, C₁₀ saturé), acide 1,11-undécanedioïque (C₁₁ saturé), acide 1,12-dodécanedioïque (C₁₂ saturé), acide 1,13-tridécanedioïque (ou acide brassylique, C₁₃ saturé), acide 1,14-tétradécanedioïque (C₁₄ saturé), acide 1,15-pentadécanedioïque (C₁₅ saturé), acide 1,16-hexadécanedioïque (ou acide thapsique, C₁₆ saturé), acide 1,18-octadécanedioïque (C₁₈ saturé) et leurs mélanges de deux ou plusieurs d'entre eux, en toutes proportions.

La Demanderesse a découvert en particulier que l'incorporation d'antioxydants dérivés du phénol permet de maintenir les performances d'un ou plusieurs MCP, plus particulièrement les diacides définis ci-avant et de ce fait, d'en allonger la durée de vie. De plus, il n'était pas connu jusqu'alors d'utiliser des antioxydants en présence de tels diacides.

### Procédé

La présente invention a donc également pour objet un procédé pour diminuer le vieillissement d'un matériau à changement de phase tel que défini précédemment, comprenant une étape d'ajout d'un ou plusieurs additifs, tels que définis précédemment, audit matériau à changement de phase.

### Composition

La présente invention a également pour objet une composition comprenant un ou plusieurs additifs, tels que définis précédemment, et un ou plusieurs matériaux à changement de phase tels que définis ci-avant.

La composition de l'invention est préparée selon un procédé comprenant une étape d'ajout d'un ou plusieurs additifs, tels que définis précédemment, à un ou plusieurs matériaux à changement de phase, tels que définis précédemment.

Les compositions selon la présente invention, peuvent notamment être utilisées dans un dispositif adapté au contrôle de la température de produits alimentaires, de produits pharmaceutiques sensibles à la chaleur, de matériaux textiles, de moteurs ou de composants et circuits électroniques, à la récupération de chaleur de réacteurs chimiques ou d'installations de combustion de déchets ou au stockage d'énergie solaire.

### Dispositif

La présente demande a donc également pour objet un dispositif adapté au stockage et à la restitution d'énergie thermique comprenant au moins une composition selon l'invention, c'est-à-dire un ou plusieurs additifs, tels que définis précédemment, et un ou plusieurs matériaux à changement de phase, tels que définis précédemment.

De préférence, le dispositif selon l'invention est un dispositif adapté au contrôle de la température de produits alimentaires, de produits pharmaceutiques sensibles à la chaleur, de matériaux textiles, de moteurs ou de composants et circuits électroniques, de batteries, au stockage et à la récupération de chaleur, comme par exemple celle issue de réacteurs chimiques ou d'installations de combustion ou de tout type de procédé générant de la chaleur de déchets ou au stockage d'énergie solaire.

La chaleur absorbée par la composition selon la présente invention peut ensuite être restituée pour permettre le réchauffage d'une paroi telle qu'une enceinte de réacteur chimique ou d'un fluide.

### Procédé de stockage

La présente invention a également pour objet un procédé de stockage, et éventuellement de restitution d'énergie thermique, comprenant la mise en contact d'une paroi à refroidir avec un premier fluide caloporteur puis dudit premier fluide caloporteur avec une composition comprenant un ou plusieurs additifs, tels que définis précédemment, et un ou plusieurs matériaux à changement de phase tels que définis précédemment, et éventuellement la mise en contact de ladite composition avec un second fluide caloporteur puis éventuellement dudit second fluide caloporteur avec une paroi à réchauffer.

Dans ce procédé, le fluide caloporteur peut comprendre de l'air, de l'eau, un glycol, des saumures de sels conducteurs thermiquement, des huiles siliconées, des huiles issues du raffinage de coupes pétrolières, des huiles d'origine végétale et leurs mélanges.

L'invention sera mieux comprise à la lumière des exemples suivants, donnés à des fins d'illustration seulement et qui n'ont pas pour but de restreindre la portée de l'invention, définie par les revendications annexées.

### EXEMPLES

### Protocole du test

On fait fondre 20g d'acide sébacique respectivement dans 3 béchers de 100 mL, placés dans une étuve à 150°C. Une fois que l'acide sébacique est fondu, on ajoute 0,5% de thiodiéthylène-bis[3-(3,5-di-tert-butyl-4-hydroxyphényl)propionate] dans un bêcher, 0,5% de 3-(3',5'-di-tert-butyl-4-hydroxyphényl)propionate de stéaryle dans un deuxième bêcher, le troisième faisant office de témoin, ne contient que de l'acide sébacique. On homogénéise les contenus des béchers pendant 1 minute, avant de les placer à l'étuve pendant 96h à 150°C sous air. Puis on laisse refroidir les échantillons.

A l'issue de ces traitements thermiques de vieillissement, des essais calorimétriques ont été effectués par DSC (calorimétrie différentielle à balayage) à l'aide d'un appareil de DSC Q10 de la société TA Instruments muni d'un bain de refroidissement permettant d'effectuer des balayages de température entre 30°C et 200°C.
Les essais ont été conduits avec des masses d'échantillons comprises entre 6 mg et 15 mg et une vitesse de chauffe de 10°C/mn. Une fois la température de 200°C atteinte, cette température est maintenue 5 minutes puis un cycle de refroidissement à une vitesse de -10°C/mn est engagé.

### MCP de référence (R et R_{V}) : sans antioxydants

R: acide sébacique n'ayant subi aucun chauffage.
R_{V}: acide sébacique, ayant subi un chauffage à l'air à 150°C pendant 96 heures.

### MCP selon la présente invention (R_{VA}) et MCP comparatif (R_{VB}): en présence d'antioxydants

R_{VA}: R_{V} + 0,5% de thiodiéthylène-bis[3-(3,5-di-tert-butyl-4-hydroxyphényl)propionate], dont le numéro CAS est 41484-35-9.
R_{VB}: R_{V} + 0,5% de 3-(3',5'-di-tert-butyl-4-hydroxyphényl)propionate de stéaryle, dont le numéro CAS est 2082-79-3.

Le tableau 1 ci-dessous regroupe les variations des enthalpies de fusion et de cristallisation mesurées pour les différents MCP additivés ou non, décrits ci-dessus. Les variations sont calculées par rapport aux enthalpies de fusion et de cristallisation de l'acide sébacique (R).

Les mesures d'enthalpie de l'acide sébacique initial qui n'a subi aucun traitement sont:
- Enthalpie de fusion: 227 J.g⁻¹.
- Enthalpie de cristallisation: 215 J.g⁻¹

Les variations sont calculées par (valeur finale de R_{VA} ou R_{VB} ou R_{V} - valeur initiale de R)/valeur initiale de R pour les variations d'enthalpie.

**Tableau 1 : enthalpies de fusion et de cristallisation**

| Echantillon | Enthalpie de fusion J.g⁻¹ | ΔH/H (%) | Enthalpie de cristallisation J.g⁻¹ | ΔH/H (%) |
|---|---|---|---|---|
| R | 227 | | 215 | |
| R_{V} | 195 | -14,5 | 193 | -10,2 |
| R_{VA} | 208 | -8,4 | 214 | -0,5 |
| R_{VB} | 203 | -10,6 | 200 | -7 |

Le tableau ci-dessus montre que l'utilisation d'additifs apporte une stabilité thermique satisfaisante (exemples R_{VA} et R_{VB}, respectivement) et permet de diminuer le vieillissement de l'acide sébacique.

Ce phénomène est fortement amélioré quand l'additif utilisé est un antioxydant de formule (I) et en particulier, le thiodiéthylène-bis[3-(3,5-di-tert-butyl-4-hydroxyphényl)propionate]. En effet, l'acide sébacique est capable en présence de cet antioxydant, d'être chauffé à 150°C en continu pendant 96h, tout en conservant une partie des propriétés thermodynamiques du MCP (tableau 1, exemple R_{VA} ). Alors que l'échantillon R_{V}, contenant uniquement de l'acide sébacique a des valeurs d'enthalpies bien moindres (tableau 1, exemple R_{V}).

Cet antioxydant permet donc de diminuer le vieillissement du matériau à changement de phase.

## Revendications

1. Utilisation d'un ou plusieurs additifs de formule (I) suivante : 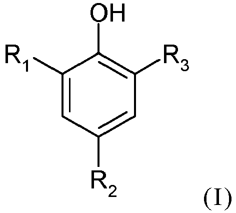 dans laquelle :
- R₁ représente une chaîne alkyle linéaire ou ramifiée, saturée ou insaturée en C₁ à C₁₈, éventuellement substituée par un hétéroatome,
- R₃ représente une chaîne alkyle linéaire ou ramifiée, saturée ou insaturée en C₁ à C₁₈, éventuellement substituée par un hétéroatome,
- R₂ représente un groupement -(CH₂)₂CO-OR₄,
dans lequel R₄ représente :
- un groupement de formule (II) suivante : 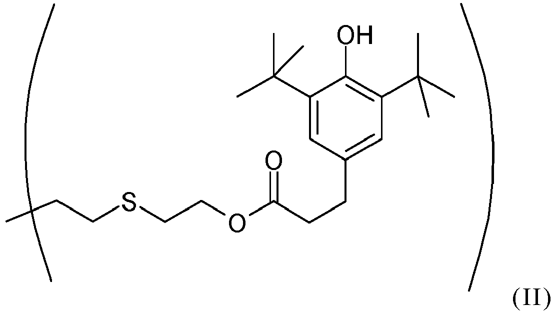 pour diminuer le vieillissement d'un matériau à changement de phase choisi parmi les acides α,ω-dicarboxyliques aliphatiques linéaires ou ramifiés en C₄ à C₄₀.

2. Utilisation selon la revendication précédente, **caractérisée en ce que** le groupe R₁ représente une chaîne alkyle linéaire ou ramifiée, saturée ou insaturée en C₁ à C₄, la chaîne alkyle étant éventuellement substituée par un hétéroatome.

3. Utilisation selon l'une quelconque des revendications précédentes, **caractérisée en ce que** le groupe R₃ représente une chaîne alkyle linéaire ou ramifiée, saturée ou insaturée en C₁ à C₄, la chaîne alkyle étant éventuellement substituée par un hétéroatome.

4. Utilisation selon l'une quelconque des revendications précédentes, **caractérisée en ce que** l'additif est :
- le thiodiéthylène-bis[3-(3,5-di-tert-butyl-4-hydroxyphényl)-propionate].

5. Utilisation selon l'une quelconque des revendications précédentes, **caractérisée en ce que** le ou les additifs sont présents dans une teneur allant de 0,01 à 15% en poids, de préférence de 0,05 à 10% en poids, et plus préférentiellement de 0,1 à 5% en poids, par rapport au poids total du mélange comprenant le ou les additifs et le ou les matériaux à changement de phase.

6. Utilisation selon l'une quelconque des revendications précédentes, **caractérisée en ce que** le ou les matériaux à changement de phase sont choisis parmi les acides α,ω-dicarboxyliques aliphatiques linéaires ou ramifiés en C₆ à C₃₆, et plus préférentiellement en C₆ à C₁₈.

7. Utilisation selon la revendication 6, **caractérisée en ce que** le ou les matériaux à changement de phase sont choisis parmi les acides butanedioïque (ou acide succinique, C₄ saturé), maléique (C₄ insaturé), adipique (ou acide hexanedioïque, C₆ saturé), acide 1,4-cyclohexyldioïque (ou acide téréphtalique), pimélique (ou acide 1,7-heptanedioïque, C₇ saturé), subérique (ou acide 1,8-octanedioïque, C₈ saturé), azélaïque (ou acide 1,9-nonanedioïque, C₉ saturé), sébacique (ou acide 1,10-décanedioïque, C₁₀ saturé), acide 1,11-undécanedioïque (C₁₁ saturé), acide 1,12-dodécanedioïque (C₁₂ saturé), acide 1,13-tridécanedioïque (ou acide brassylique, C₁₃ saturé), acide 1,14-tétradécanedioïque (C₁₄ saturé), acide 1,15-pentadécanedioïque (C₁₅ saturé), acide 1,16-hexadécanedioïque (ou acide thapsique, C₁₆ saturé), acide 1,18-octadécanedioïque (C₁₈ saturé) et leurs mélanges de deux ou plusieurs d'entre eux, en toutes proportions.

8. Composition comprenant :
un ou plusieurs additifs, tels que définis selon l'une quelconque des revendications 1 à 4; et
un ou plusieurs matériaux à changement de phase, tels que définis selon l'une quelconque des revendications 1, 6 et 7.

9. Dispositif adapté au stockage et à la restitution d'énergie thermique, comprenant un ou plusieurs additifs, tels que définis selon l'une quelconque des revendications 1 à 4, et un ou plusieurs matériaux à changement de phase, tels que définis selon l'une quelconque des revendications 1, 6 et 7.

10. Dispositif selon la revendication 9, **caractérisé en ce qu'**il est adapté au contrôle de la température de produits alimentaires, de produits pharmaceutiques sensibles à la chaleur, de matériaux textiles, de moteurs ou de composants et circuits électroniques, de batteries, au stockage et à la récupération de chaleur, comme par exemple celle issue de réacteurs chimiques ou d'installations de combustion ou de tout type de procédé générant de la chaleur de déchets ou au stockage d'énergie solaire.

11. Procédé de stockage, et éventuellement de restitution d'énergie thermique, comprenant la mise en contact d'une paroi à refroidir avec un premier fluide caloporteur puis dudit premier fluide caloporteur avec une composition comprenant un ou plusieurs additifs tels que définis selon l'une quelconque des revendications 1 à 4 et un ou plusieurs matériaux à changement de phase, tels que définis selon l'une quelconque des revendications 1, 6 et 7, et éventuellement la mise en contact de ladite composition avec un second fluide caloporteur puis éventuellement dudit second fluide caloporteur avec une paroi à réchauffer.

## Patentansprüche

1. Verwendung von einem oder mehreren Additiven mit der folgenden Formel (I): 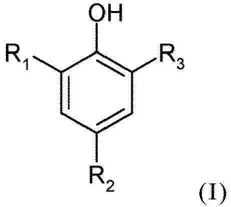 wobei:
- R₁ eine lineare oder verzweigte, gesättigte oder ungesättigte C₁-C₁₈-Alkylkette darstellt, eventuell substituiert durch ein Heteroatom,
- R₃ eine lineare oder verzweigte, gesättigte oder ungesättigte C₁-C₁₈-Alkylkette darstellt, eventuell substituiert durch ein Heteroatom,
- R₂ eine - (CH₂)₂CO-OR₄-Gruppe darstellt,
wobei R₄ darstellt:
- eine Gruppe der folgenden Formel (II): 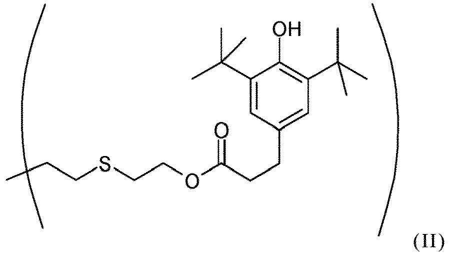 zur Reduzierung des Alterns eines Phasenwechselmaterials, das aus den linearen oder verzweigten aliphatischen C₄-C₄₀-α,ω-Dicarbonsäuren ausgewählt ist.

2. Verwendung nach vorangehendem Anspruch, **dadurch gekennzeichnet, dass** die Gruppe R₁ eine lineare oder verzweigte, gesättigte oder ungesättigte C₁-C₄-Alkylkette darstellt, wobei die Alkylkette eventuell durch ein Heteroatom substituiert ist.

3. Verwendung nach einem der vorangehenden Ansprüche, **dadurch gekennzeichnet, dass** die Gruppe R₃ eine lineare oder verzweigte, gesättigte oder ungesättigte C₁-C₄-Alkylkette darstellt, wobei die Alkylkette eventuell durch ein Heteroatom substituiert ist.

4. Verwendung nach einem der vorangehenden Ansprüche, **dadurch gekennzeichnet, dass** das Additiv ist:
- Thiodiethylen-bis[3-(3,5-di-tert-butyl-4-hydroxyphenyl)-propionat].

5. Verwendung nach einem der vorangehenden Ansprüche, **dadurch gekennzeichnet, dass** das oder die Additive in einem Gehalt vorhanden sind, der von 0,01 bis 15 Gew.-%, vorzugsweise von 0,05 bis 10 Gew.-% und vorzugsweise von 0,1 bis 5 Gew.-% in Bezug auf das Gesamtgewicht des Gemischs reicht, das das oder die Additive und das oder die Phasenwechselmaterialien umfasst.

6. Verwendung nach einem der vorangehenden Ansprüche, **dadurch gekennzeichnet, dass** das oder die Phasenwechselmaterialien aus den linearen oder verzweigten aliphatischen C₆-C₃₆- und vorzugsweise C₆-C₁₈-α,ω-Dicarbonsäuren ausgewählt sind.

7. Verwendung nach Anspruch 6, **dadurch gekennzeichnet, dass** das oder die Phasenwechselmaterialien aus der Butandi- (oder Succinsäure, C₄ gesättigt), Malein- (C₄ ungesättigt), Adipinsäure (oder Hexandisäure, C₆ gesättigt), 1,4-Cyclohexyldi- (oder Terephthalsäure), Pimelin- (oder 1,7-Heptandisäure, C₇ gesättigt), Suberin-(oder 1,8-Octandisäure, C₈ gesättigt), Azelain- (oder 1,9-Nonandisäure, C₉ gesättigt), Sebacin- (oder 1,10-Decandisäure, C₁₀ gesättigt), 1,11-Undecandisäure (C₁₁ gesättigt), 1,12-Dodecandisäure (C₁₂ gesättigt), 1,13-Tridecandisäure (oder Brassylsäure, C₁₃ gesättigt), 1,14-Tetradecandisäure (C₁₄ gesättigt), 1,15-Pentadecandisäure (C₁₅ gesättigt), 1,16-Hexadecandisäure (oder Thapsinsäure, C₁₆ gesättigt), 1,18-Octadecandisäure (C₁₈ gesättigt) und ihren Gemischen aus zwei oder mehreren von ihnen in allen Verhältnissen ausgewählt sind.

8. Zusammensetzung, umfassend:
ein oder mehrere Additive nach einem der Ansprüche 1 bis 4, und
ein oder mehrere Phasenwechselmaterialien nach einem der Ansprüche 1, 6 und 7.

9. Vorrichtung, die zum Speichern und zur Wiedergabe von thermischer Energie geeignet ist, umfassend ein oder mehrere Additive nach einem der Ansprüche 1 bis 4 und ein oder mehrere Phasenwechselmaterialien nach einem der Ansprüche 1, 6 und 7.

10. Vorrichtung nach Anspruch 9, **dadurch gekennzeichnet, dass** sie zur Steuerung der Temperatur von Lebensmittelprodukten, von wärmeempfindlichen pharmazeutischen Produkten, von Textilmaterialien, von Motoren oder von elektronischen Bauteilen und Schaltkreisen, von Batterien, zur Speicherung und Wiedergewinnung von Wärme wie beispielsweise von derjenigen, die von chemischen Reaktoren oder Verbrennungsanlagen oder Verfahren aller Art ausgeht, die Wärme aus Abfällen erzeugen, oder zur Speicherung von Solarenergie geeignet ist.

11. Verfahren zur Speicherung und eventuell zur Wiedergabe von thermischer Energie, umfassend das Inkontaktversetzen einer zu kühlenden Wand mit einem ersten Wärmeträgerfluid, dann des ersten Wärmeträgerfluids mit einer Zusammensetzung, die ein oder mehrere Additive nach einem der Ansprüche 1 bis 4 umfasst und einem oder mehreren Phasenwechselmaterialien nach einem der Ansprüche 1, 6 und 7 und eventuell das Inkontaktversetzen der Zusammensetzung mit einem zweiten Wärmeträgerfluid, dann eventuell des zweiten Wärmeträgerfluids mit einer zu erwärmenden Wand.

## Claims

1. A use of one or more additives of formula (I) below: 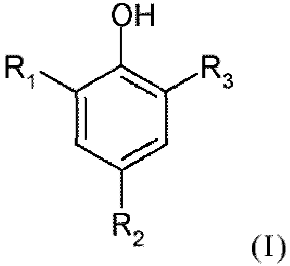 wherein:
- R₁ represents a C₁ to C₁₈ linear or branched, saturated or unsaturated alkyl chain, optionally substituted by a heteroatom,
- R₃ represents a C₁ to C₁₈ linear or branched, saturated or unsaturated alkyl chain, optionally substituted by a heteroatom,
- R₂ represents a group -(CH₂)₂CO-OR₄,
wherein R₄ represents:
- a group of formula (II) below: 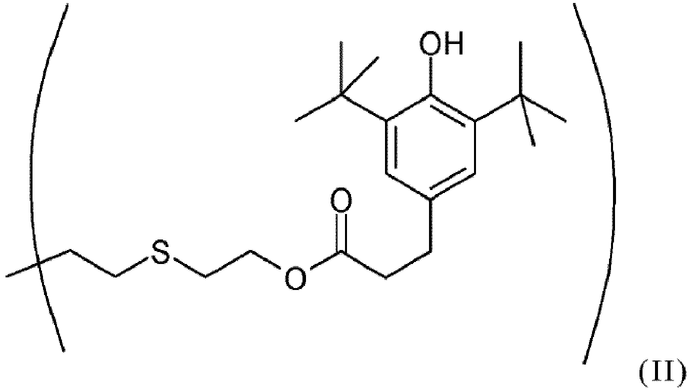 to reduce the ageing of a phase-change material selected from C₄ to C₄₀ linear or branched aliphatic α,ω-dicarboxylic acids.

2. The use according to the preceding claim, **characterised in that** the group R₁ represents a C₁ to C₄ linear or branched, saturated or unsaturated alkyl chain, the alkyl chain being optionally substituted by a heteroatom.

3. The use according to any one of the preceding claims, **characterised in that** the group R₃ represents a C₁ to C₄ linear or branched, saturated or unsaturated alkyl chain, the alkyl chain being optionally substituted by a heteroatom.

4. The use according to any one of the preceding claims, **characterised in that** the additive is:
- the thiodiethylene-bis[3-(3,5-di-tert-butyl-4-hydroxyphenyl)- propionate].

5. The use according to any one of the preceding claims, **characterised in that** the additive(s) are present in a content ranging from 0.01 to 15% by weight, preferably from 0.05 to 10% by weight, and more preferably from 0.1 to 5% by weight, relative to the total weight of the mixture comprising the additive(s) and the phase-change material (s) .

6. The use according to any one of the preceding claims, **characterised in that** the phase-change material(s) are selected from C₆ to C₃₆ and more preferably C₆ to C₁₈ linear or branched aliphatic α,ω-dicarboxylic acids.

7. The use according to claim 6, **characterised in that** the phase-change material(s) are selected from butanedioic (or succinic acid, saturated C₄), maleic (unsaturated C₄), adipic (or hexanedioic acid, saturated C₆) acids, 1,4-cyclohexyldioic acid (or terephthalic acid), pimelic (or 1,7-heptanedioic acid, saturated C₇), suberic (or 1,8-octanedioic acid, saturated C₈), azelaic (or 1,9-nonanedioic acid, saturated C₉), sebacic (or 1,10-decanedioic acid, saturated C₁₀) acids, 1,11-undecanedioic acid (saturated C₁₁), 1,12-dodecanedioic acid (saturated C₁₂), 1,13-tridecanedioic acid (or brassylic acid, saturated C₁₃), 1,14-tetradecanedioic acid (saturated C₁₄), 1,15-pentadecanedioic acid (saturated C₁₅), 1,16-hexadecanedioic acid (or thapsic acid, saturated C₁₆), 1,18-octadecanedioic acid (saturated C₁₈), and mixtures of two or more of them, in any proportions.

8. A composition comprising:
one or more additives, as defined according to any one of claims 1 to 4; and
one or more phase-change materials, as defined according to any one of claims 1, 6 and 7.

9. A device adapted for storing and restoring thermal energy, comprising one or more additives, as defined according to any one of claims 1 to 4, and one or more phase-change materials, as defined according to any one of claims 1, 6 and 7.

10. The device according to claim 9, **characterised in that** it is adapted for controlling the temperature of food products, heat-sensitive pharmaceutical products, textile materials, motors or electronic components and circuits, batteries, storing and recovering heat, such as for example that from chemical reactors or combustion plants or any type of method generating waste heat or for storing solar energy.

11. A method for storing, and optionally restoring thermal energy, comprising contacting a wall to be cooled with a first heat transfer fluid then said first heat transfer fluid with a composition comprising one or more additives as defined according to any one of claims 1 to 4 and one or more phase-change materials, as defined according to any one of claims 1, 6 and 7, and optionally contacting said composition with a second heat transfer fluid then optionally said second heat transfer fluid with a wall to be heated.
